# EUROPEAN PATENT APPLICATION

(11) **EP 4 518 376 A1**
(43) Date of publication of application: **05.03.2025**
(21) Application number: 23816340.6
(22) Date of filing: 30.05.2023
(51) Int. Cl.: H04W 4/80, H04W 8/00, H04W 74/08, G01S 13/02

(54) **DYNAMIC SCHEDULING METHOD AND DEVICE FOR ULTRA WIDEBAND COMMUNCATION**

(30) Priority: 30.05.2022 KR 20220066243
(71) Applicant: Samsung Electronics Co., Ltd., Suwon-si, Gyeonggi-do 16677 (KR)
(72) Inventor: OH, Hyunseob, Suwon-si Gyeonggi-do 16677 (KR); SEO, Seungbeom, Suwon-si Gyeonggi-do 16677 (KR); KOO, Jonghoe, Suwon-si Gyeonggi-do 16677 (KR); BHATTACHARYA, Sagnik, Suwon-si Gyeonggi-do 16677 (KR); SEO, Jinwook, Suwon-si Gyeonggi-do 16677 (KR)
(74) Representative: Nederlandsch Octrooibureau
(86) International application number: PCT/KR2023/007394
(87) International publication number: WO 2023/234679

(57) **Abstract**

An operating method of a first ultra wide band (UWB) device, according to various embodiments of the present disclosure, comprises the steps of: receiving, from a second UWB device, a beacon message including configuration information about a superframe through which a plurality of UWB devices communicate; confirming a hybrid period (HP) and a ranging-only period (ROP) in the superframe on the basis of the configuration information; and communicating with a third UWB device on the basis of the HP and the ROP.

## Description

### [Technical Field]

The disclosure relates to UWB communication and, more specifically, to a method and device for providing dynamic scheduling for a plurality of UWB devices in a context where a plurality of UWB devices and various ranging modes are mixed.

### [Background Art]

The Internet is evolving from the human-centered connection network by which humans create and consume information to the Internet of Things (IoT) network by which information is communicated and processed between things or other distributed components. Another arising technology is the Internet of Everything (IoE), which is a combination of the Big data processing technology and the IoT technology through, e.g., a connection with a cloud server. Implementing the IoT requires technical elements, such as sensing technology, a wired/wireless communication and network infrastructure, service interface and security technologies. A recent ongoing research for thing-to-thing connection is on techniques for sensor networking, machine-to-machine (M2M), or machine-type communication (MTC).

In the IoT environment may be offered intelligent Internet Technology (IT) services that collect and analyze the data generated by the things connected with one another to create human life a new value. The IoT may have various applications, such as the smart home, smart building, smart city, smart car or connected car, smart grid, health-care, or smart appliance industry, or state-of-art medical services, through conversion or integration of conventional information technology (IT) techniques and various industries.

As wireless communication systems evolve to provide various services, a need arises for a method for effectively providing such services. For example, it is possible to use a ranging technique for measuring the distance between electronic devices using ultra-wide band (UWB). UWB is a wireless communication technology that uses a very wide frequency band of several GHz or more in a baseband without using a wireless carrier.

### [Detailed Description of the Invention]

### [Technical Problem]

The disclosure proposes a method for providing dynamic scheduling for a plurality of UWB devices in a context where a plurality of UWB devices and various ranging modes are mixed.

### [Technical Solution]

According to various embodiments of the disclosure, a method for operating a first ultra-wide band (UWB) device may comprise receiving, from a second UWB device, a beacon message including configuration information about a superframe where a plurality of UWB devices communicate, identifying a hybrid period (HP) and a ranging-only period (ROP) in the superframe based on the configuration information, and communicating with a third UWB device based on the HP and the ROP.

According to various embodiments of the disclosure, a method for operating a second ultra-wide band (UWB) device may comprise transmitting a beacon message including configuration information about a superframe in which a plurality of UWB devices communicate to a first UWB device, receiving, from the first UWB device, a change request (CR) for requesting to change a hybrid period (HP) or a ranging-only period (ROP) in the superframe, and changing the HP or the ROP in the superframe based on the CR.

According to various embodiments of the disclosure, a first ultra-wide band (UWB) comprises a transceiver and a controller. The controller is configured to control to receive, from a second UWB device, a beacon message including configuration information about a superframe where a plurality of UWB devices communicate, identify a hybrid period (HP) and a ranging-only period (ROP) in the superframe based on the configuration information, and control to communicate with a third UWB device based on the HP and the ROP.

According to various embodiments of the disclosure, a second ultra-wide band (UWB) may comprise a transceiver and a controller. The controller is configured to control to transmit a beacon message including configuration information about a superframe in which a plurality of UWB devices communicate to a first UWB device, control to receive, from the first UWB device, a change request (CR) for requesting to change a hybrid period (HP) or a ranging-only period (ROP) in the superframe, and change the HP or the ROP in the superframe based on the CR.

### [Advantageous Effects]

Various embodiments of the disclosure may provide dynamic scheduling for a plurality of UWB devices in a context where a plurality of UWB devices and various ranging modes are mixed, thereby saving power used during UWB communication.

### [Brief Description of the Drawings]

FIG. 1 illustrates an example architecture of a UWB device;
FIG. 2 illustrates an example configuration of a framework of a UWB device;
FIG. 3 illustrates various examples of a UWB ranging method;
FIG. 4 illustrates an example of a structure of a ranging block and a round used for UWB ranging;
FIG. 5 illustrates an example in which a plurality of UWB devices perform communication according to an embodiment of the disclosure;
FIG. 6 illustrates an example for describing a role of each of a plurality of UWB devices according to an embodiment of the disclosure;
FIG. 7 illustrates an example for describing a superframe time structure according to an embodiment of the disclosure;
FIG. 8 illustrates an example configuration of a UWB device operating as a local controller according to an embodiment of the disclosure;
FIG. 9 illustrates an example configuration of a UWB device operating as a local controlee according to an embodiment of the disclosure;
FIG. 10 illustrates an example of an operation method of a UWB device operating as a global coordinator according to an embodiment of the disclosure;
FIG. 11 illustrates an example of an operation method of a UWB device operating as a local controller according to an embodiment of the disclosure;
FIG. 12 illustrates another example of an operation method of a UWB device operating as a local controller according to an embodiment of the disclosure;
FIG. 13A illustrates an example of a descriptor IE format included in an advanced beacon message according to an embodiment of the disclosure;
FIG. 13B illustrates an example of a sub-period table element format included in the descriptor IE format of FIG. 13A according to an embodiment of the disclosure;
FIGS. 14A, 14B, and 14C each illustrate examples of information included in a change request transmitted by a local controller according to an embodiment of the disclosure;
FIG. 15 illustrates a structure of a first UWB device according to an embodiment of the disclosure; and
FIG. 16 illustrates a structure of a second UWB device according to an embodiment of the disclosure.

### [Mode for Carrying out the Invention]

Hereinafter, embodiments of the disclosure are described in detail with reference to the accompanying drawings.

In describing embodiments, the description of technologies that are known in the art and are not directly related to the present invention is omitted. This is for further clarifying the gist of the present disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the present disclosure, and methods for achieving the same may be understood through the embodiments to be described below taken in conjunction with the accompanying drawings. However, the present invention is not limited to the embodiments disclosed herein, and various changes may be made thereto. The embodiments disclosed herein are provided only to inform one of ordinary skilled in the art of the category of the present disclosure. The present invention is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, the components and 'units' may be implemented to execute one or more CPUs in a device or secure multimedia card. According to embodiments of the disclosure, a "...unit" may include one or more processors.

As used herein, the term 'terminal' or 'device' may also be referred to as a mobile station (MS), user equipment (UE), user terminal (UT), terminal, wireless terminal, access terminal (AT), subscriber unit, subscriber station (SS), wireless device, wireless communication device, wireless transmit/receive unit (WTRU), mobile node, or mobile or may be referred to in other terms. Various embodiments of the terminal may include cellular phones, smart phones with wireless communication capabilities, personal digital assistants (PDAs) with wireless communication capabilities, wireless modems, portable computers with wireless communication capabilities, capturing/recording/shooting/filming devices, such as digital cameras, having wireless communication capabilities, game players with wireless communications capabilities, music storage and playback home appliances with wireless communications capabilities, Internet home appliances capable of wireless Internet access and browsing, or portable units or terminals incorporating combinations of those capabilities. Further, the terminal may include a machine to machine (M2M) terminal and a machine-type communication (MTC) terminal/device, but is not limited thereto. In the disclosure, the terminal may be referred to as an electronic device or simply as a device.

Hereinafter, the operational principle of the disclosure is described below with reference to the accompanying drawings. When determined to make the subject matter of the disclosure unnecessarily unclear, the detailed description of known functions or configurations may be skipped in describing embodiments of the disclosure. The terms as used herein are defined considering the functions in the present disclosure and may be replaced with other terms according to the intention or practice of the user or operator. Therefore, the terms should be defined based on the overall disclosure.

Hereinafter, embodiments of the present invention are described in detail with reference to the accompanying drawings. Further, although a communication system using UWB is described in connection with embodiments of the present invention, as an example, embodiments of the present invention may also apply to other communication systems with similar technical background or features. For example, a communication system using Bluetooth or ZigBee may be included therein. Further, embodiments of the present invention may be modified in such a range as not to significantly depart from the scope of the present invention under the determination by one of ordinary skill in the art and such modifications may be applicable to other communication systems.

When determined to make the subject matter of the present invention unclear, the detailed description of the known art or functions may be skipped. The terms as used herein are defined considering the functions in the present disclosure and may be replaced with other terms according to the intention or practice of the user or operator. Therefore, the terms should be defined based on the overall disclosure.

In general, wireless sensor network technology is largely divided into a wireless local area network (WLAN) technology and a wireless personal area network (WPAN) technology according to the recognition distance. In this case, WLAN is a technology based on IEEE 802.11 which enables access to the backbone network within a radius of about 100m. WPAN is a technology based on IEEE 802.15 which includes Bluetooth, ZigBee, and ultra-wide band (UWB). A wireless network in which such a wireless network technology is implemented may include a plurality of electronic devices.

UWB may refer to a short-range high-rate wireless communication technology using a wide frequency band of several GHz or more, low spectral density, and short pulse width (e.g., 1 nsec to 4 nsec) in a baseband state. UWB may mean a band itself to which UWB communication is applied. UWB may enable secure and accurate ranging between devices. Thus, UWB enables relative position estimation based on the distance between two devices or accurate position estimation of a device based on the distance from fixed devices (whose positions are known).

The terminology used herein is provided for a better understanding of the disclosure, and changes may be made thereto without departing from the technical spirit of the disclosure.

"Application dedicated file (ADF)" may be, e.g., a data structure in an application data structure that may host an application or application specific data.

"Application protocol data unit (APDU)" may be a command and a response used when communicating with the application data structure in the UWB device.

"Application specific data" may be, e.g., a file structure having a root level and an application level including UWB controlee information and UWB session data required for a UWB session.

"Controller" may be a ranging device that defines and controls ranging control messages (RCM) (or control messages).

"Controlee" may be a ranging device using a ranging parameter in the RCM (or control message) received from the controller.

Unlike "static STS," "dynamic scrambled timestamp sequence (STS) mode" may be an operation mode in which the STS is not repeated during a ranging session. In this mode, the STS may be managed by the ranging device, and the ranging session key that generates STS may be managed by a secure component.

"Applet" may be, e.g., an applet executed on the secure component including UWB parameters and service data. In this disclosure, Applet may be a FiRa Applet defined by FiRa.

"Ranging device" may be a device capable of performing UWB ranging. In the disclosure, the Ranging Device may be an Enhanced Ranging Device (ERDEV) defined in IEEE 802.15.4z or a FiRa Device defined by FiRa. The Ranging Device may be referred to as a UWB device.

"UWB-enabled Application" may be an application for UWB service. For example, the UWB-enabled Application may be an application using a Framework API for configuring an OOB Connector, a Secure Service, and/or a UWB service for a UWB session. In this disclosure, "UWB-enabled Application" may be abbreviated as an application or a UWB application. UWB-enabled Application may be a FiRa-enabled Application defined by FiRa.

"Framework" may be a component that provides access to Profiles, individual-UWB configuration and/or notifications. "Framework" may be, e.g., a collection of logical software components including Profile Manager, OOB Connector, Secure Service, and/or UWB service. In the disclosure, the Framework may be a FiRa Framework defined by FiRa.

"OOB Connector" may be a software component for establishing an out-of-band (OOB) connection (e.g., BLE connection) between Ranging Devices. In the disclosure, the OOB Connector may be a FiRa OOB Connector defined by FiRa.

"Profile" may be a previously defined set of UWB and OOB configuration parameters. In the disclosure, Profile may be a FiRa Profile defined by FiRa.

"Profile Manager" may be a software component that implements a profile available on the Ranging Device. In the disclosure, the Profile Manager may be a FiRa Profile Manager defined by FiRa.

"Service" may be an implementation of a use case that provides a service to an end-user.

"Smart Ranging Device" may be a ranging device that may implement an optional Framework API. In the disclosure, the Smart Ranging Device may be a FiRa Smart Device defined by FiRa.

"Global Dedicated File (GDF)" may be a root level of application specific data including data required to establish a USB session.

"Framework API" may be an API used by a UWB-enabled Application to communicate with the Framework.

"Initiator" may be a Ranging Device that initiates a ranging exchange.

"Object Identifier (OID)" may be an identifier of the ADF in the application data structure.

"Out-Of-Band (OOB)" may be data communication that does not use UWB as an underlying wireless technology.

"Ranging Data Set (RDS)" may be data (e.g., UWB session key, session ID, etc.) required to establish a UWB session when it is needed to protect confidentiality, authenticity and integrity.

"Responder" may be a ranging device that responds to the Initiator in a ranging exchange.

"STS" may be a ciphered sequence for increasing the integrity and accuracy of ranging measurement timestamps. The STS may be generated from the ranging session key.

"Secure channel" may be a data channel that prevents overhearing and tampering.

"Secure Component" may be an entity (e.g., SE or TEE) having a defined security level that interfaces with UWBS for the purpose of providing RDS to UWBS, e.g., when dynamic STS is used.

"Secure Element (SE)" may be a tamper-resistant secure hardware component that may be used as a Secure Component in the Ranging Device.

"Secure ranging" may be ranging based on STS generated through a strong encryption operation.

"Secure Service" may be a software component for interfacing with a Secure Component, such as a Secure Element or Trusted Execution Environment (TEE).

"Service Applet" may be an applet on a Secure Component that handles service specific transactions.

"Service Data" may be data defined by a service provider that needs to be transferred between two ranging devices to implement a service.

"Service Provider" may be an entity that defines and provides hardware and software required to provide a specific service to an end-user.

"Static STS mode" is an operation mode in which STS is repeated during a session, and does not need to be managed by the Secure Component.

"Secure UWB Service (SUS) Applet" may be an applet on the SE that communicates with the applet to retrieve data needed to enable secure UWB sessions with other ranging devices. The SUS Applet may transfer corresponding data (information) to the UWBS.

"UWB Service" may be a software component that provides access to the UWBS.

"UWB Session" may be a period from when the controller and the controlee start communication through UWB until the communication stops. A UWB Session may include ranging, data transfer, or both ranging and data transfer.

"UWB Session ID" may be an ID (e.g., a 32-bit integer) that identifies the UWB Session, shared between the controller and the controller.

"UWB session key" may be a key used to protect the UWB Session. The UWB Session Key may be used to generate the STS. In this disclosure, the UWB session key may be a UWB ranging session key (URSK), and may be abbreviated as a session key.

"UWB subsystem (UWBS)" may be a hardware component implementing the UWB PHY and MAC layers specifications. UWBS may have an interface to Framework and an interface to Secure Component to search for RDS. In this disclosure, the UWB PHY and MAC specifications may be, e.g., FiRa PHY and FiRa MAC specifications defined by FiRa referring to IEEE 802.15.4/4z.

"DL-TDoA" may be called Downlink Time Difference of Arrival (DL-TDoA), reverse TDoA, and its default operation may be for the user equipment (UE) (Tag device (UWB device) to overhear the message of the anchor device while a plurality of anchor devices broadcast or exchange messages.

"Anchor device" may be referred to as a UWB anchor or a UWB anchor device and may be a UWB device deployed in a specific location to provide a positioning service. For example, the anchor device may be a UWB device installed by a service provider on a wall, ceiling, structure, or the like in a room to provide an indoor positioning service. Anchor devices may be divided into initiator anchors and responder anchors according to the order and role of transmitting messages.

"Initiator anchor" may be referred to as an initiator UWB anchor, an initiator anchor device, or the like and may announce the start of a specific ranging round. The initiator anchor may schedule a ranging slot for the responder anchors operating in the same ranging round to respond. The initiation message of the initiator anchor may be referred to as an initiator Downlink TDoA Message (DTM) or Poll message. The initiation message of the initiator anchor may include a transmission timestamp. The initiator anchor may additionally transfer an end message after receiving responses from the responder anchors. The end message of the initiator anchor may be referred to as Final DTM or Final message. The end message may include the time of the reply to the messages sent by the responder anchors. The end message may include a transmission timestamp.

"Responder anchor" may also be referred to as a Responder UWB anchor, a Responder UWB anchor device, a Responder anchor device, etc. The responder anchor may be a UWB anchor responding to the initiation message of the initiator anchor. The message with which the responder anchor responds may include the time of reply to the initiation message. The message with which the responder anchor responds may be referred to as a Responder DTM or a Response message. The response message of the responder anchor may include a transmission timestamp.

"Cluster" may mean a set of UWB anchors covering a specific area. The cluster may be composed of an initiator UWB anchor and responder UWB anchors responding thereto. For 2D positioning, one initiator UWB anchor and at least three responder UWB anchors are typically required and, for 3D positioning, one initiator UWB anchor and at least four responder UWB anchors are required. If the initiator UWB anchor and the responder UWB anchor may be accurately time-synchronized through a separate wired/wireless connection, one initiator UWB anchor and at least two responder UWB anchors are required for 2D positioning, and one initiator UWB anchor and at least three responder UWB anchors are required for 3D positioning. Unless otherwise stated, it is assumed that there is no separate device for wired/wireless time synchronization between UWB anchors. The cluster area may be a space formed by the UWB anchors constituting the cluster. To support the positioning service for a wide area, a plurality of clusters may be configured to provide the positioning service to the UE. In this disclosure, a cluster may be referred to as a cell. In the disclosure, the operation of the cluster may be understood as the operation of anchor(s) belonging to the cluster.

"Active ranging round" may be a ranging round in which the UE (UWB device) playing a tag role in DL-TDoA operates in an active state. In the active ranging round or in the active state, the UE may overhear the message transmitted by the anchor device. In this disclosure, the active ranging round may be referred to as an active round.

"In-active ranging round" may be a ranging round in which the UE (UWB device) playing a tag role in DL-TDoA operates in an in-active state or a sleep state. In the in-active ranging round or in the in-active state (sleep state), the UE cannot overhear the message transmitted by the anchor device. In this disclosure, the in-active ranging round may be referred to as a sleep ranging round, an in-active round, or a sleep round.

When determined to make the subject matter of the present invention unnecessarily unclear, the detailed description of related known functions or features may be skipped in describing the disclosure.

Hereinafter, various embodiments of the disclosure are described with reference to the accompanying drawings.

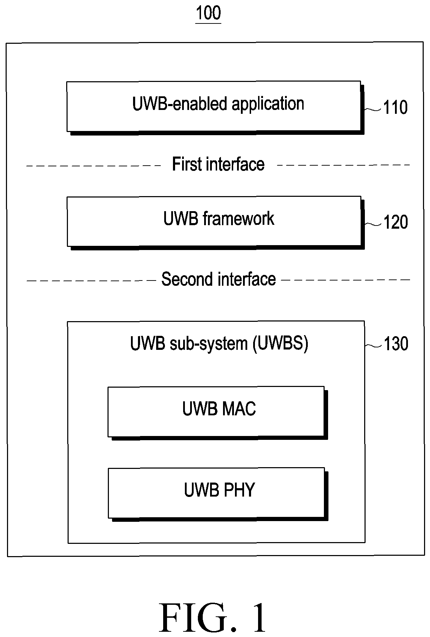

FIG. 1 illustrates an example architecture of a UWB device.

In the disclosure, the UWB device 100 may be an electronic device supporting UWB communication. The UWB device 100 may be, e.g., a ranging device supporting UWB ranging. In an embodiment, the Ranging Device may be an Enhanced Ranging Device (ERDEV) defined in IEEE 802.15.4z or a FiRa Device defined by FiRa.

In the embodiment of FIG. 1, the UWB device 100 may interact with other UWB devices through a UWB session.

Further, the UWB device 100 may implement a first interface (Interface #1) that is an interface between the UWB-enabled application 110 and the UWB framework (or UWB framework) 120, and the first interface allows the UWB-enabled application 110 on the UWB device 100 to use the UWB capabilities of the UWB device 100 in a predetermined manner. In an embodiment, the first interface may be a Framework API or a proprietary interface, but is not limited thereto.

The UWB device 100 may implement a second interface (Interface #2) that is an interface between the UWB Framework 110 and the UWB subsystem (UWBS, 130). In an embodiment, the second interface may be a UWB Command Interface (UCI) or proprietary interface, but is not limited thereto.

Referring to FIG. 1, the UWB device 100 may include a UWB-enabled Application 110, a Framework (UWB Framework) 120, and/or a UWBS 130 including a UWB MAC Layer and a UWB Physical Layer. Depending on the embodiment, some entities may not be included in the UWB device, or additional entities (e.g., security layer) may be further included.

The UWB-enabled Application 110 may trigger establishment of a UWB session by a UWBS 130 through the first interface. The UWB-enabled Application 110 may use one of previously defined profiles (profile). For example, the UWB-enabled Application 110 may use one of the profiles defined in FiRa or a custom profile. The UWB-enabled Application 110 may use the first interface to handle related events, such as service discovery, ranging notifications, and/or error conditions.

The Framework 120 may provide access to Profiles, individual-UWB configuration and/or notifications. The Framework 120 may support at least one of a function for UWB ranging and transaction execution, a function to provide an interface to the application and UWBS 130, or a function to estimate the location of the device 100. The Framework 120 may be a set of software components. As described above, the UWB-enabled Application 110 may interface with the Framework 120 through the first interface, and the Framework 120 may interface with the UWBS 130 through the second interface.

Meanwhile, in the disclosure, the UWB-enabled Application 110 and/or Framework 120 may be implemented by an application processor (AP) (or processor). Accordingly, in the disclosure, the operation of the UWB-enabled Application 110 and/or the Framework 120 may be understood as performed by an AP (or a processor). In this disclosure, the framework may be referred to as an AP or a processor.

The UWBS 130 may be a hardware component including a UWB MAC Layer and a UWB Physical Layer. The UWBS 130 may perform UWB session management and may communicate with the UWBS of another UWB device. The UWBS 130 may interface with the Framework 120 through the second interface and may obtain the secure data from the Secure Component. In an embodiment, the Framework (or application processor) 120 may transmit a command to the UWBS 130 through UCI, and the UWBS 130 may transmit a response to the command to the Framework 120. The UWBS 130 may transfer a notification to the Framework 120 through the UCI.

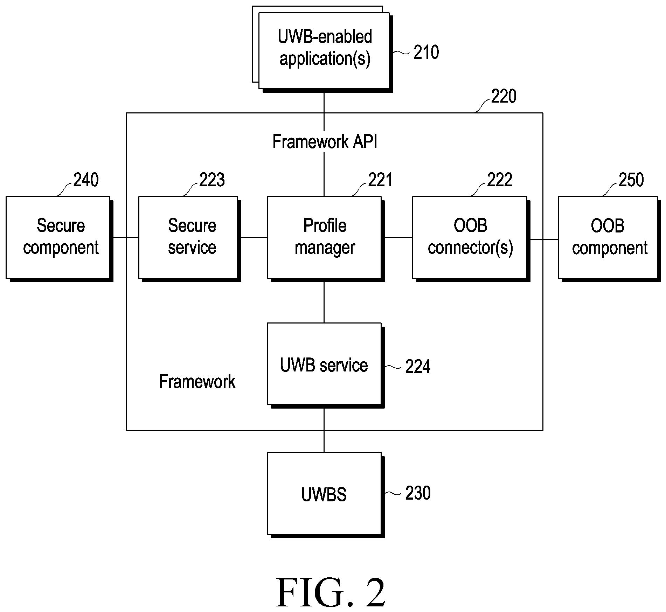

FIG. 2 illustrates an example configuration of a framework of a UWB device.

The UWB device of FIG. 2 may be an example of the UWB device of FIG. 2.

Referring to FIG. 2, the Framework 220 may include, e.g., software components, such as Profile Manager 221, OOB Connector(s) 222, Secure Service 223 and/or UWB service 224.

The Profile Manager 221 may serve to manage profiles available on the UWB device. Profile may be a set of parameters required to establish communication between UWB devices. For example, a profile may include a parameter indicating which OOB secure channel is used, a UWB/OOB configuration parameter, a parameter indicating whether the use of a particular secure component is mandatory, and/or a parameter related to the file structure of the ADF. The UWB-enabled Application 210 may communicate with the Profile Manager 221 through the first interface (e.g., Framework (API)).

The OOB Connector 222 may serve to establish an OOB connection with another device. The OOB Connector 222 may handle an OOB step including a discovery step and/or a connection step. The OOB component (e.g., BLE component) 250 may be connected to the OOB connector 222.

The Secure Service 223 may play a role of interfacing with a Secure Component 240, such as SE or TEE.

The UWB Service 224 may perform a role of managing the UWBS 230. The UWB Service 224 may provide access to the UWBS 230 from the Profile Manager 221 by implementing the second interface.

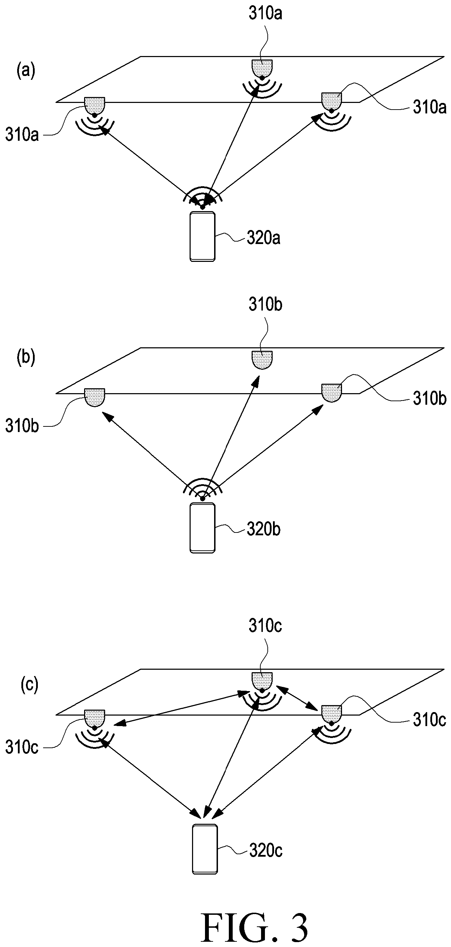

FIG. 3 illustrates various examples of a UWB ranging method.

FIG. 3(a)illustrates an example of a two way ranging (TWR) scheme, FIG. 3(b) illustrates an example of an Uplink Time Difference of Arrival (TDoA) scheme (one way ranging (OWR)), and FIG. 3(c) illustrates an example of a Downlink TDoA scheme.

"One-way ranging (OWR)" may be a ranging scheme using a time difference of arrival (TDoA) localization method. The TDoA method corresponds to a method for locating a mobile device (tag device) based on a relative arrival time of a single message or multiple messages. For a description of OWR (TDoA), reference may be made to the description of IEEE 802.15.4z. As an example of the OWR scheme, an uplink (UL)-TDoA scheme may be included.

"Two-way ranging (TWR)" may be a ranging scheme capable of estimating a relative distance between two devices by measuring time of flight (ToF) through the exchange of ranging messages between the two devices. The TWR scheme may be one of double-sided two-way ranging (DS-TWR) and single-sided two-way ranging (SS-TWR). SS-TWR may be a procedure for performing ranging through one round-trip time measurement. DS-TWR may be a procedure for performing ranging through two round-trip time measurements. For a description of SS-TWR and DS-TWR, reference may be made to the description of IEEE 802.15.4z.

"DL-TDoA" may be called Downlink Time Difference of Arrival (DL-TDoA), reverse TDoA, and its default operation may be for the user equipment (UE) (tag device) to overhear the message of the anchor device while a plurality of anchor devices broadcast or exchange messages. The UE performing the DL-TDoA operation may overhear the messages transmitted by the two anchor devices to calculate a Time Difference of Arrival (TDoA) proportional to the difference between the distances between each anchor device and the UE. The UE may calculate a relative distance to the anchor device by using TDoA with several pairs of anchor devices and use it for positioning. The operation of the anchor device for DL-TDoA may be similar to that of Double Side-Two Way Ranging (DS-TWR) defined in IEEE 802.15.4z and may further include other useful time information so that the UE may calculate the TDoA. In the disclosure, DL-TDoA may be referred to as DL-TDoA localization.

In the disclosure, the TWR scheme corresponds to a method in which the UWB devices exchange ranging messages therebetween to calculate the time of flight (ToF) and determine the location of the UWB device based thereon. The Uplink TDoA method corresponds to a method in which UWB anchors receive the ranging message transmitted from the UWB device (tag), calculate the time difference (TDoA) and, based thereupon, determine the location of the UWB device. The Downlink TDoA method corresponds to a method in which the UWB device (UWB tag) receives the ranging messages transmitted from the UWB anchors, calculates the time difference (TDoA) and, based thereupon, determines the location of the UWB device.

Referring to FIG. 3(a), the UWB device 320a may perform ranging through a ranging exchange using at least one UWB anchor 310a and a plurality of ranging messages. The scheme of the TWR of FIG. 3A may follow the scheme defined in IEEE 802.15.4/4z. As shown in FIG. 3(a), the TWR may be easily installed because synchronization or networking is not required between UWB anchors, but has a disadvantage in that the number of users (UEs) is limited.

Referring to FIG. 3(b), the user's UWB device 320b may transmit (broadcast) ranging messages to at least one UWB anchor 310b, and at least one UWB anchor 310b may identify the location of the UWB device 320b based on the time difference (TDoA) when the ranging messages are received. The uplink TDoA as shown in FIG. 3(b) has the advantage of reducing power consumption in the UE, but has disadvantages, such as difficulty in installation due to the need for synchronization or networking between UWB anchors, privacy issues arising as the system operator is aware of the locations of all the users, and limit to the number of users (UEs).

Referring to FIG. 3(c), the UWB device 320c may receive (sniff) the ranging messages that at least one UWB anchor 310c transmits/receives therebetween and identify its location. The downlink TDoA as shown in FIG. 3(c) has such advantages as no limit to the number of UEs (scalability), no privacy issues unlike in Uplink TDoA, no need for synchronization or networking between UWB anchors and ease to install, possibility of the UD itself to calculate its location, and possibility of enhanced positioning using additional data, e.g., sensor data from the UE. However, the Downlink TDoA of FIG. 3(c) may consume more power in the UE due to a longer wake-up duration and more calculations as compared with the TWR of FIG. 3(a) and the Uplink TDoA of FIG. 3(b).

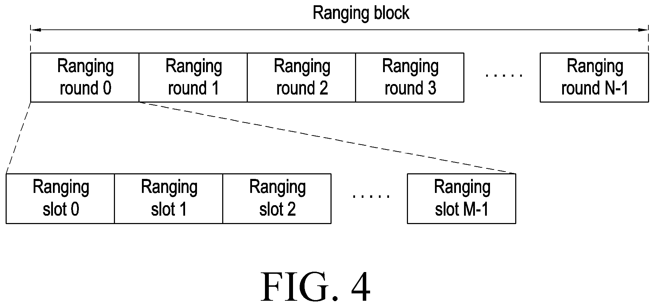

FIG. 4 illustrates an example of a structure of a ranging block and a round used for UWB ranging.

In this disclosure, the ranging block refers to a time period for ranging. The ranging round may be a period of sufficient duration to complete one entire range-measurement cycle in which a set of UWB devices participating in a ranging exchange involves. The ranging slot may be a sufficient period for transmission of at least one ranging frame (RFRAME) (e.g., ranging initiation/reply/final message, etc.).

As shown in FIG. 4, one ranging block may include at least one ranging round. Each ranging round may include at least one ranging slot.

When the ranging mode is a block-based mode, a mean time between contiguous ranging rounds may be a constant. Alternatively, when the ranging mode is an interval-based mode, the time between contiguous ranging rounds may be dynamically changed. In other words, the interval-based mode may adopt a time structure having an adaptive spacing.

The number and duration of slots included in the ranging round may be changed between ranging rounds. This may be configured through a control message from the controller.

In the disclosure, a ranging block, a ranging round, and a ranging slot may be abbreviated as a block, a round, and a slot.

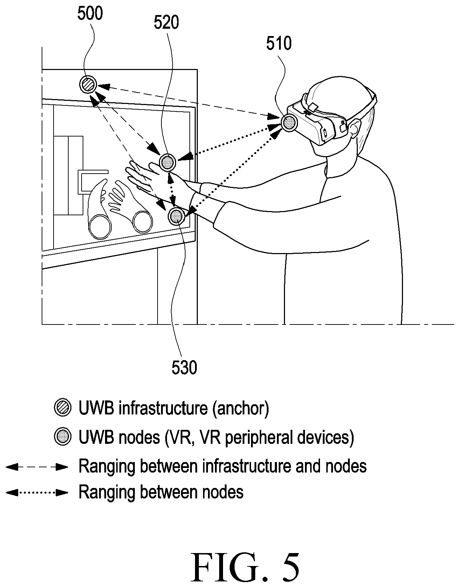

FIG. 5 illustrates an example in which a plurality of UWB devices perform communication according to an embodiment of the disclosure.

Referring to FIG. 5, the first UWB device 500 operating as an anchor or UWB infrastructure may perform UWB communication with each of a plurality of UWB devices 510, 520, and 530 worn by the user and operating as UWB nodes. The plurality of UWB devices 510, 520, and 530 may perform UWB communication with each other.

According to an embodiment, each of the plurality of UWB devices 510, 520, and 530 may be implemented as an augmented reality (AR) device or a virtual reality (VR) device including a UWB module (or chip). For example, the second UWB device 510 may be implemented as VR glasses worn by the user on the face, the third UWB device 520 may be implemented as a first VR device worn by the user on the hand, and the fourth UWB device 530 may be implemented as a second VR device worn by the user on the hand.

According to an embodiment, the second UWB device 510 may use a UWB ranging value or an angle of arrival (AoA) value for initial reference direction position setting and periodic direction calibration of the VR glasses.

According to an embodiment, the UX of the AR/VR device may be supported through one-to-one (O2O) mode ranging, one-to-many (O2M) mode ranging, and/or many-to-many (M2M) mode ranging between the first UWB device 500 and the plurality of UWB devices 510, 520, and 530.

According to an embodiment, the UX of the AR/VR device may be supported through one-to-one (O2O) mode ranging, one-to-many (O2M) mode ranging, and/or many-to-many (M2M) mode ranging between the plurality of UWB devices 510, 520, and 530 and peripheral auxiliary devices (e.g., wireless earphones, watch/ring type devices, and/or haptic devices).

Meanwhile, the maximum sampling rate that may be expected when the UWB device uses the nominal ranging parameter is slightly lower than the sampling rate in the sensor, but may be at a level (e.g., several ms) enough for UX assistance for the VR/AR device. The UWB device continuously maintaining the maximum sampling rate may enable more accurate and agile UX assistance, but may greatly increase the energy consumption burden of a battery-powered UWB device (e.g., an AR/VR device) and a peripheral assistance device.

The disclosure proposes a dynamic ranging parameter adjustment and/or ranging scheduling method for reducing energy consumption of UWB devices (e.g., AR/VR devices) and/or peripheral assistance devices.

For AR/VR services, the number of UWB devices participating in ranging and/or the degree of movement of the user may continue to change, and considering a tradeoff between the sampling rate and energy efficiency, there is a need to dynamically adjust ranging parameters and scheduling.

Further, dynamic time resource management is required considering a context in which multiple device access and various ranging modes are mixed, a context in which device-to-device (D2D) ranging is mixed, a context in which infrastructure-to-device (I2D) ranging is mixed, a context in which the number of devices participating in/leaving ranging is variable, and/or a context in which a plurality of ranging groups are mixed.

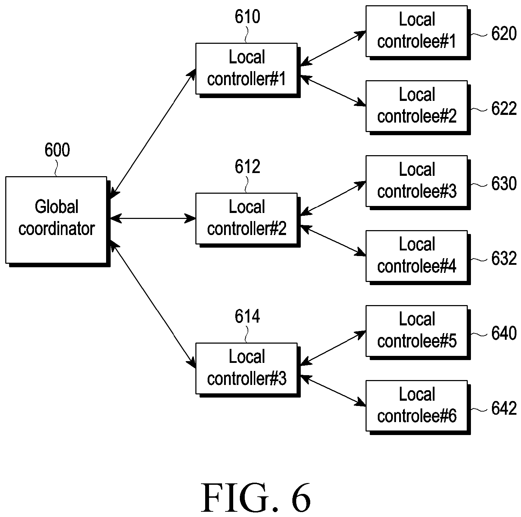

FIG. 6 illustrates an example for describing a role of each of a plurality of UWB devices according to an embodiment of the disclosure.

Referring to FIG. 6, each of the plurality of UWB devices may be assigned a predetermined role during UWB communication. For example, the first UWB device 600 may operate as a global coordinator. The second UWB device 610 may operate as a first local controller #1, the third UWB device 612 may operate as a second local controller #2, and the fourth UWB device 614 may operate as a third local controller #3.

In the disclosure, the global coordinator may manage (or control) a superframe time structure in which various UWB devices and various types of ranging methods coexist. The global coordinator may broadcast an advanced beacon to manage (or control) the superframe time structure.

In the disclosure, the local controller of each ranging group may control the RDEV of the corresponding ranging group by transmitting a ranging control message (RCM). The local controlee in the corresponding ranging group may apply the ranging parameters included in the RCM received from the local controller during UWB communication. For example, in the case of DL-TDoA, an initiator among DT-anchors may be a local controller.

The local controller of each ranging group may receive an advanced beacon broadcast from the global coordinator. According to an embodiment, when the local controller intends to change the time resource allocated to the ranging group, the local controller may transmit a change request for the time resource in the local roller.

According to an embodiment, the local controller may apply a hybrid period (HP), a ranging-only period (ROP), an HP, and sub-periods in the ROP based on the advanced beacon received from the global coordinator.

For example, the second UWB device 610 may control UWB communication between the fifth UWB device 620 operating as the first local controlee#1 and the sixth UWB device 622 operating as the second local controlee#2. The third UWB device 612 may control UWB communication between the seventh UWB device 630 operating as the third local controlee#3 and the eighth UWB device 632 operating as the fourth local controlee#4. The fourth UWB device 614 may control UWB communication between the ninth UWB device 640 operating as the fifth local controlee #53 and the tenth UWB device 642 operating as the sixth local controlee #6.

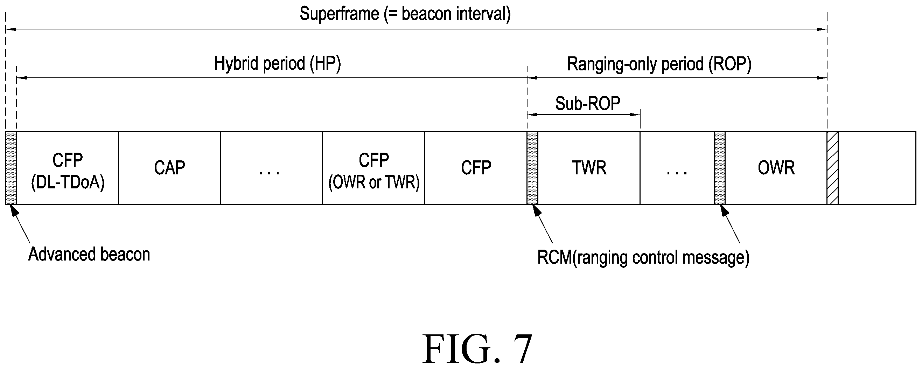

FIG. 7 illustrates an example for describing a superframe time structure according to an embodiment of the disclosure.

Referring to FIG. 7, a superframe managed (or controlled) by a global coordinator may include a hybrid period (HP) and a ranging-only period (ROP).

According to an embodiment, the HP in the superframe may include a plurality of contention free periods (CFPs) and a plurality of contention access periods (CAPs). For example, a first sub-period in the HP may be allocated to a CFP for DL-TDoA, a second sub-period in the HP may be allocated to a CAP, and a third sub-period in the HP may be allocated to a CFP for OWR or TWR.

According to an embodiment, the ROP in the superframe may be a period for ranging only between UWB devices. For example, a first sub-ROP (or first sub-period) in the ROP may be allocated for the TWR, and a second sub-ROP (or second sub-period) in the ROP may be allocated for the OWR.

According to an embodiment, the global coordinator may broadcast an advanced beacon for managing (or controlling) the superframe in a first sub-period in the superframe. The local controller in each ranging group may receive the advanced beacon broadcast from the global coordinator. According to an embodiment, the advanced beacon may include information for configuring HP, ROP, and sub-periods (e.g., CFP and CAP of HP and lower ROP of ROP).

According to an embodiment, the global coordinator may transmit an advanced beacon for managing (or controlling) the superframe, thereby enabling coexistence of a plurality of ranging groups. Each ranging group may be composed of a local controller and RDEV (or local controlees).

According to an embodiment, each local controller of each ranging group may transmit a ranging control message (RCM) in the first sub-ROP or the second sub-ROP in the ROP to control the RDEV of the corresponding ranging group. According to an embodiment, each of the sub-ROPs in the ROP may be implemented as a ranging block period allocated to each ranging group.

According to an embodiment, each local controller of each ranging group may transmit a ROP change request (ROP-CR) for requesting a ROP change in the CAP or CFP in the HP to the global coordinator. According to an embodiment, based on a plurality of ROP-CRs from a plurality of ranging groups and an HP change request (HP-CR) for requesting an HP change, the global coordinator may adjust (or control) the entire ROP duration and the sub-ROP duration.

According to an embodiment, the local controller of each ranging group may control ranging parameters (e.g., a block period and a ranging period) and scheduling information about an RDEV (or a local controlee) belonging to the allocated sub-ROP.

According to an embodiment, the local controller in the ranging group may transmit a ranging change request (RCR) to the local controller. According to an embodiment, the local controller operating in the CFP or CAP of the HP may transmit the HP-CR in the CAP or CFP. Here, the RCR may be an IE transmitted by the responder to change ranging parameters defined in IEEE 802.15.4z.

According to an embodiment, the global coordinator may adjust (or control) the entire HP period and the CAP/CFP period based on the received HP-CR.

According to an embodiment, the global coordinator in each ranging group may change the ranging time structure based on at least one of HP-CR and ROP-CR, and the number of CAPs and CFPs required in HP.

According to an embodiment, the local controller in each ranging group may change the ranging time structure based on at least one of the number of RDEVS of each group, the required range sampling rate, and the RCR.

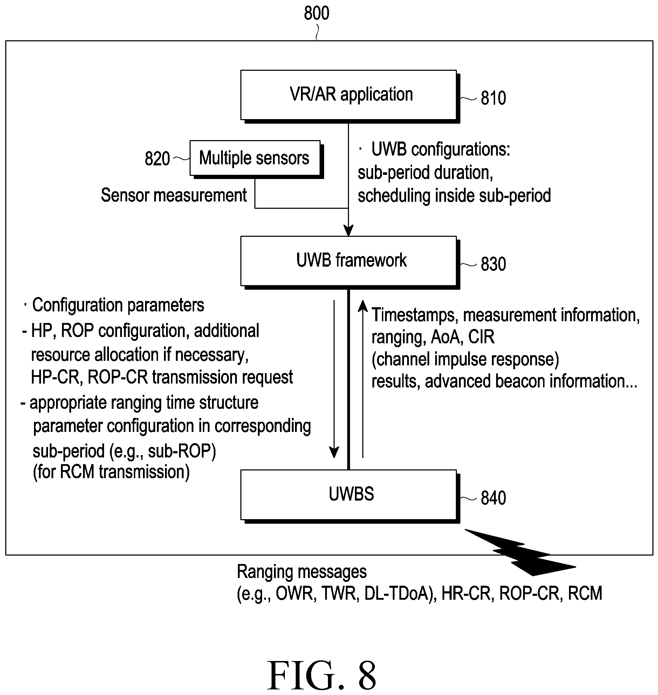

FIG. 8 illustrates an example configuration of a UWB device operating as a local controller according to an embodiment of the disclosure.

Referring to FIG. 8, a UWB device 800 operating as a local controller may include a VR/AR application 810, a plurality of sensors 820, a UWB framework 830, and a UWBS 840. The UWB device 800 may be implemented as a VR/AR device, and a VR/AR application 810 for providing a service to a VR/AR user may be implemented (or installed) in the UWB device 800.

According to an embodiment, the UWB device 800 implemented as a VR/AR device may configure a network of a single ranging group with a haptic sensor device operating as a local controlee.

According to an embodiment, the UWBS 840 may transmit an OWR/TWR result value (e.g., ranging, AoA, CIR) and a DL-TDoA result value (e.g., Tx/Rx timestamp, time measurement value) to the UWB framework 830 which is a higher layer.

According to an embodiment, the UWBS 840 may transmit at least one of timestamps, measurement information, ranging, AoA, a channel impulse response (CIR) result value, and information about the advanced beacon to the UWB framework 830.

According to an embodiment, the VR/AR application 810 may continuously track the mobility of the user based on sensor measurement information provided from the plurality of sensors 820. For example, when the VR/AR application 810 determines that the movement of the user is small based on the sensor measurement information provided from the plurality of sensors 820, the UWB ranging period may be set to be long (sparse ranging). For example, when the VR/AR application 810 determines that the movement of the user is large or fast based on the sensor measurement information provided from the plurality of sensors 820, the UWB ranging period may be set to be short (fine ranging).

According to an embodiment, the VR/AR application 810 may determine the ranging parameter within the HP/ROP duration and/or the sub-period based on sensor measurement information received from the plurality of sensors 820 and UWB ranging or TDoA-based positioning result values received from the UWB framework 830. According to an embodiment, the VR/AR application 810 may transmit the ranging parameter within the determined HP/ROP duration and/or sub-period to the UWB framework 830.

According to an embodiment, the VR/AR application 810 may transmit a UWB configuration (e.g., sub-period (HP) duration, sub-period scheduling information) to the UWB framework 830.

According to an embodiment, the UWB framework 830 may transmit configuration parameters (e.g., HP, ROP configuration, if additional resource allocation is required, HP-CR, ROP-CR transmission request, and ranging time structure parameter configuration (for RCM transmission) within a corresponding sub-period (e.g., sub-ROP)) to the UWBS 840 through the UCI. According to an embodiment, the ranging parameter in the sub-period may be adjusted based on the RCM and the RCR, and if it is necessary to change the superframe time structure and allocate additional time, the UWB device 800 may transmit the ROP-CR and/or the HP-CR to the UWB device performing the global initiator operation.

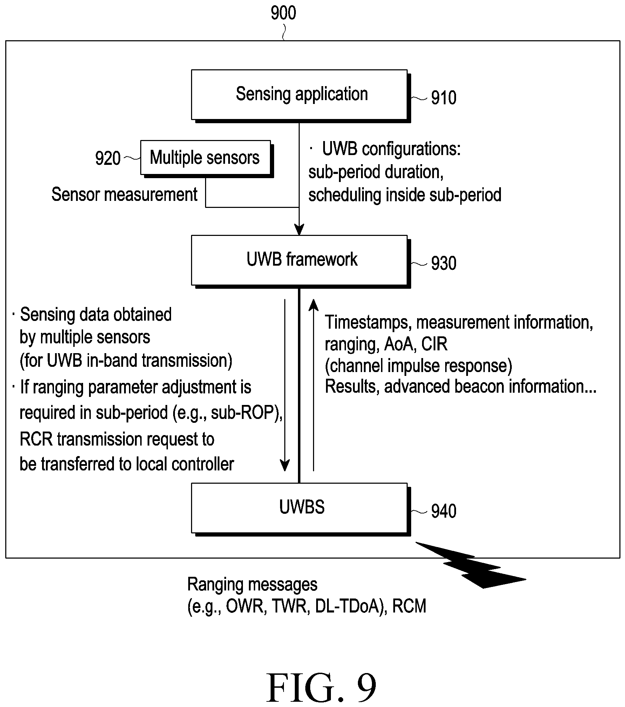

FIG. 9 illustrates an example configuration of a UWB device operating as a local controlee according to an embodiment of the disclosure.

Referring to FIG. 9, a UWB device 900 operating as a local controlee may include a sensing application 910, a plurality of sensors 920, a UWB framework 930, and a UWBS 940. The UWB device 900 may be implemented as a haptic sensor device, and a sensing application 910 for providing sensing information to the VR/AR user may be implemented (or installed) in the UWB device 900.

According to an embodiment, the UWB device 900 implemented as a haptic sensor device may configure a network of a single ranging group with a VR/AR device operating as a local controller.

According to an embodiment, the UWBS 940 may transmit an OWR/TWR result value (e.g., ranging, AoA, CIR) and/or a DL-TDoA result value (e.g., Tx/Rx timestamp, time measurement) to the UWB framework 930 which is a higher layer.

According to an embodiment, the UWBS 940 may transmit at least one of timestamps, measurement information, ranging, AoA, a channel impulse response (CIR) result value, and information about the advanced beacon to the UWB framework 930.

According to an embodiment, the sensing application 910 may continuously track the mobility of the user based on sensor measurement information provided from the plurality of sensors 920. For example, when the sensing application 910 determines that the movement of the user is small based on the sensor measurement information provided from the plurality of sensors 920, the UWB ranging period may be set to be long (sparse ranging). For example, when the sensing application 910 determines that the movement of the user is large or fast based on the sensor measurement information provided from the plurality of sensors 920, the UWB ranging period may be set to be short (fine ranging).

According to an embodiment, the sensing application 910 may determine the ranging parameter in the HP/ROP duration and/or the sub-period at a level appropriate for reporting sensor measurement information to the VR/AR device (e.g., considering the generation rate of sensor measurement information). According to an embodiment, the sensing application 910 may transmit the ranging parameter within the determined HP/ROP duration and/or sub-period to the UWB framework 930.

According to an embodiment, the sensing application 910 may transmit UWB configurations (e.g., preferred sub-period (HP, ROP) duration, ranging parameters) to the UWB framework 930.

According to an embodiment, the UWB framework 930 may transmit sensor measurement information for UWB in-band transmission obtained from the plurality of sensors 920 to the UWBS 940. According to an embodiment, when it is necessary to adjust the ranging parameter in the sub-period (e.g., sub-ROP), the UWB framework 930 may transmit an RCR transmission request to be transferred to the local controller.

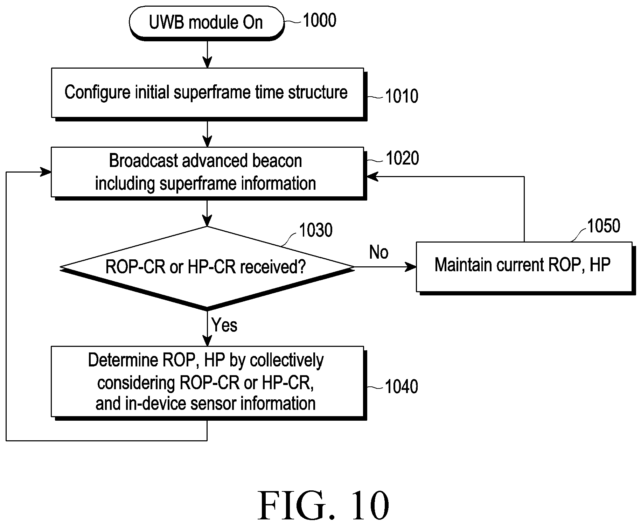

FIG. 10 illustrates an example of an operation method of a UWB device operating as a global coordinator according to an embodiment of the disclosure.

Referring to FIG. 10, in step 1000, a UWB device operating as a global coordinator may drive (turn on) a UWB module (e.g., the UWB-enabled application 110, the UWB framework 110, and/or the UWBS 130 of FIG. 1) installed in the device and supporting UWB communication.

In step 1010, the UWB device operating as the global coordinator may configure an initial superframe (or superframe time structure) for at least one ranging group. According to an embodiment, one ranging group may include one local controller and a plurality of local controlees.

In step 1020, the UWB device operating as the global coordinator may broadcast an advanced beacon including information about the superframe.

In step 1030, the UWB device operating as the global coordinator may identify (or determine) whether a ranging only period-change request (ROP-CR) or a hybrid-change request (HP-CR) has been received. According to an embodiment, the UWB device operating as the global coordinator may receive the ROP-CR or the HP-CR from the local controller.

If the UWB device operating as the global coordinator receives the ROP-CR or the HP-CR in step 1030 (Yes in 1020), the UWB device operating as the global coordinator in step 1040 may determine the ROP and/or the HP based on at least one of the ROP-CR, the HP-CR, and the sensor measurement information in the device.

If the UWB device operating as the global coordinator does not receive the ROP-CR or the HP-CR in step 1030 (No in 1020), the UWB device operating as the global coordinator in step 1050 may determine to maintain the current ROP and/or HP.

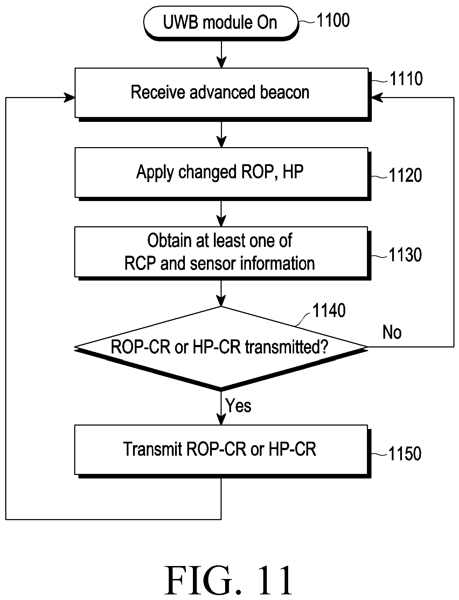

FIG. 11 illustrates an example of an operation method of a UWB device operating as a local controller according to an embodiment of the disclosure.

Referring to FIG. 11, in step 1100, a UWB device operating as a local controller may drive (turn on) a UWB module (e.g., the UWB-enabled application 110, the UWB framework 110, and/or the UWBS 130 of FIG. 1) installed in the device and supporting UWB communication.

In step 1110, the UWB device operating as the local controller may receive an advanced beacon including information about the superframe from the global coordinator.

In step 1120, the UWB device operating as the local controller may perform UWB communication by applying a superframe including a changed ROP and/or HP based on the received advanced beacon.

In step 1130, the UWB device operating as the local controller may obtain at least one of the ranging change request (RCR) and sensor measurement information obtained from the sensor in the device Here, the RCR may be a message transmitted by responders to change ranging parameters defined in IEEE 802.15.4z. According to an embodiment, the UWB device operating as the local controller may receive the RCR from the local controlee.

In step 1140, the UWB device operating as the local controller may determine whether to transmit the ROP-CR and/or the HP-CR based on at least one of the RCR and the sensor measurement information obtained from the sensor in the device.

If the UWB device operating as the local controller determines to transmit the ROP-CR and/or the HP-CR based thereon (Yes in 1140), the UWB device operating as the local controller may transmit the ROP-CR and/or the HP-CR to the global coordinator.

If the UWB device operating as the local controller determines not to transmit the ROP-CR and/or the HP-CR based thereon in step 1140 (No in 1140), the UWB device operating as the local controller may return to step 1110 and receive the advanced beacon broadcast from the global coordinator.

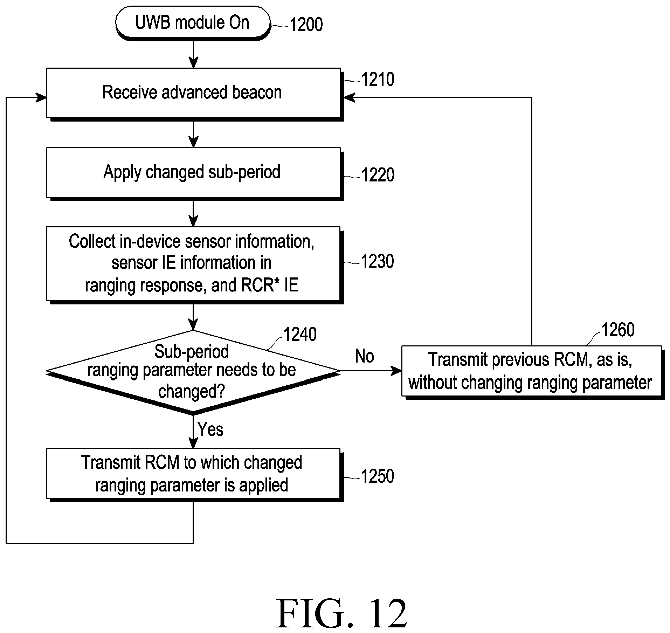

FIG. 12 illustrates another example of an operation method of a UWB device operating as a local controller according to an embodiment of the disclosure.

Referring to FIG. 12, in step 1200, a UWB device operating as a local controller may drive (turn on) a UWB module (e.g., the UWB-enabled application 110, the UWB framework 110, and/or the UWBS 130 of FIG. 1) installed in the device and supporting UWB communication.

In step 1210, the UWB device operating as the local controller may receive an advanced beacon including information about the superframe from the global coordinator.

In step 1220, the UWB device operating as the local controller may perform UWB communication by applying the sub-period of the superframe changed based on the received advanced beacon.

In step 1230, the UWB device operating as the local controller may obtain at least one of a ranging change request (RCR), sensor measurement information obtained from the sensor in the device, and sensor IE information in the ranging response. Here, the RCR may be a message transmitted by responders to change ranging parameters defined in IEEE 802.15.4z. According to an embodiment, the UWB device operating as the local controller may receive the RCR from the local controlee. According to an embodiment, the UWB device operating as the local controller may receive a ranging response from the local controlee.

According to an embodiment, the sensor IE information may be transmitted together with the general ranging message as "application payload" within the sub-ROP. According to an embodiment, the sensor IE information may be implemented as a type including a message counter, a length of sensor data, and sensor data. According to another embodiment, the sensor IE information may be implemented as a type including a message counter, a length of sensor data in Octet units, and sensor data. According to another embodiment, the sensor IE information may be implemented as a type including a sensor type ID, a length of sensor data, and sensor data.

In step 1240, the UWB device operating as the local controller may determine whether it is necessary to change a ranging parameter in the sub-period.

If the UWB device operating as the local controller determines that it is necessary to change the ranging parameter in the sub-period in step 1240 (Yes in 1240), the UWB device operating as the local controller in step 1250 may transmit the RCM to which the changed ranging parameter is applied (or included) to the local controlee.

If the UWB device operating as the local controller determines that it is not necessary to change the ranging parameter in the sub-period in step 1240 (No in 1240), the UWB device operating as the local controller in step 1260 may transmit the RCM to the local controlee without changing the ranging parameter.

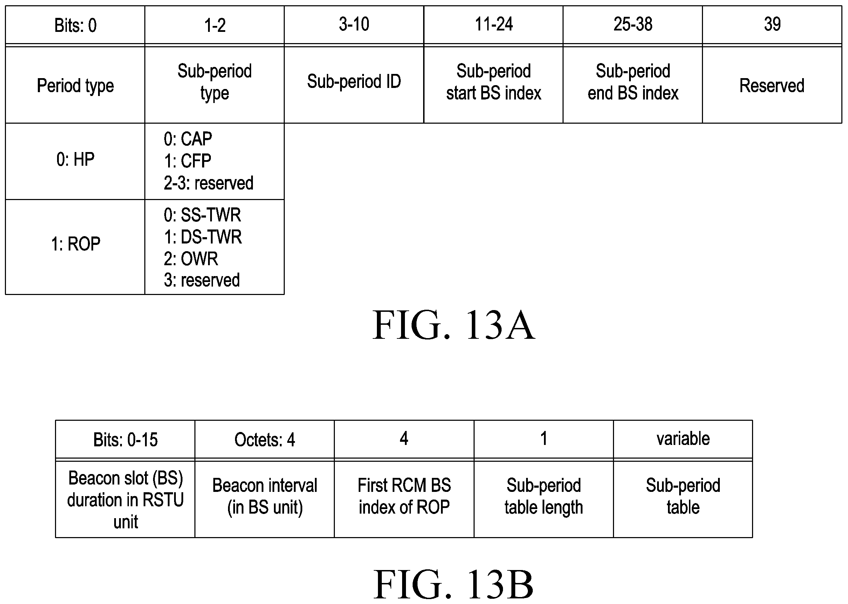

FIG. 13A illustrates an example of a descriptor IE format included in an advanced beacon message according to an embodiment of the disclosure.

The global coordinator may transmit an advanced beacon including the descriptor IE format to the local controller.

Referring to FIG. 13A, the descriptor IE format may include a beacon slot (BS) duration defined as a ranging scheduling time unit (RSTU) unit, a beacon interval defined as a BS unit, a first RCM BS index for the ROP, a sub-period table length, and a sub-period table. According to an embodiment, the sub-period table length may indicate the number of sub-periods in the superframe. According to an embodiment, the sub-period table may include configuration information for each sub-period in the superframe.

FIG. 13B illustrates an example of a sub-period table element format included in the descriptor IE format of FIG. 13A according to an embodiment of the disclosure.

Referring to FIG. 13B, the sub-period table element format may include the period type (e.g., 0: HP 1: ROP) indicating the HP or ROP, the sub-period type indicating the sub-period type of the HP or ROP, sub-period ID, sub-period start BS index indicating the start BS index of the sub-period, the sub-period end BS index indicating the last BS index of the sub-period, and reserved.

For example, if the period type is HP (period type = "0"), the sub-period type may indicate CAP (sub-period type = "0"), CFP (sub-period type = "1"), or reserved (sub-period type = "2" or "3").

For example, if the period type is ROP (period type = "1"), the sub-period type may indicate SS-TWR (sub-period type = "0"), DS-TWR (sub-period type = "1"), OWR (sub-period type = "2"), or reserved (sub-period type = "3").

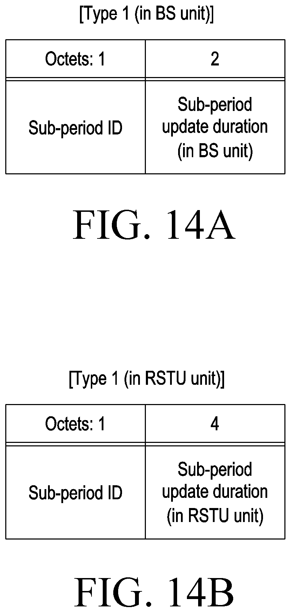

Meanwhile, the local controller may transmit ROP-CR and/or HP-CR to the global coordinator. FIGS. 14A to 14C illustrate examples of ROP-CR or HP-CR.

FIGS. 14A to 14C each illustrate an example of information included in a change request transmitted by a local controller according to an embodiment of the disclosure.

Referring to FIG. 14A, the ROP-CR or the HP-CR may include a sub-period ID and a sub-period update duration defined as a BS unit.

Referring to FIG. 14B, the ROP-CR or the HP-CR may include a sub-period ID and a sub-period update duration defined as an RSTU unit.

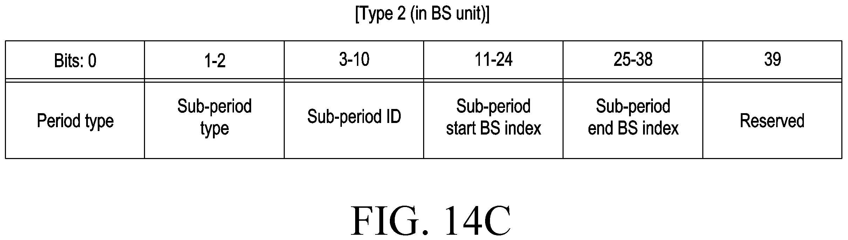

Referring to FIG. 14C, the ROP-CR or HP-CR may include the period type (e.g., 0: HP 1: ROP) indicating the HP or ROP, the sub-period type indicating the sub-period type of the HP or ROP, sub-period ID, sub-period start BS index indicating the start BS index of the sub-period, the sub-period end BS index indicating the last BS index of the sub-period, and reserved.

For example, if the period type is HP (period type = "0"), the sub-period type may indicate CAP (sub-period type = "0"), CFP (sub-period type = "1"), or reserved (sub-period type = "2" or "3").

For example, if the period type is ROP (period type = "1"), the sub-period type may indicate SS-TWR (sub-period type = "0"), DS-TWR (sub-period type = "1"), OWR (sub-period type = "2"), or reserved (sub-period type = "3").

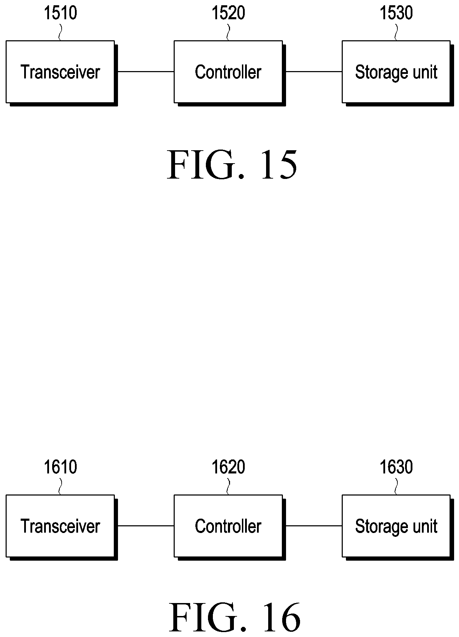

FIG. 15 illustrates a structure of a first UWB device according to an embodiment of the disclosure.

In the embodiment of FIG. 15, the first UWB device may correspond to the UWB device of FIG. 1, include a UWB device, or may be an electronic device that may include a portion of a UWB device.

In the embodiment of FIG. 15, the first UWB device may be a device configured to perform a role as a local controller.

Referring to FIG. 15, the UWB device may include a transceiver 1510, a controller 1520, and a storage unit 1530. In the disclosure, the controller may be defined as a circuit or application-specific integrated circuit or at least one processor.

The transceiver 1510 may transmit and receive signals to/from another entity. The transceiver 1510 may transmit/receive data to/from another device through, e.g., UWB communication or OOB communication (e.g., BLE communication).

The controller 1520 may control the overall operation of the UWB device according to the embodiment proposed in the disclosure. For example, the controller 1520 may control inter-block signal flow to perform the operations according to the above-described flowchart. Specifically, the controller 1520 may control the operation of the UWB device (e.g., the operation of the framework of the UWB device or the UWBS) described with reference to FIGS. 1 to 14C.

The controller 1520 may control to receive, from the second UWB device, a beacon message including configuration information for the superframe where a plurality of UWB devices communicate, and identify a hybrid period (HP) and a ranging-only period (ROP) in the superframe based on the configuration information. The controller 1520 may communicate with the third UWB device based on the HP and the ROP.

According to an embodiment, the HP may include at least one contention free period (CFP) and at least one contention access period (CAP). According to an embodiment, the ROP may include at least one of a sub-ROP for two-way ranging (TWR) and a sub-ROP for one-way ranging (OWR).

According to an embodiment, the first UWB device may be configured as a local controller, the second UWB device may be configured as a global coordinator, and the third UWB device may be configured as a local controlee.

According to an embodiment, the beacon message may include at least one of a beacon slot (BS) duration defined in units of ranging scheduling time units (RSTUs), a beacon interval defined in units of BSs, a first RCM BS index for the ROP, and information about the sub-period.

According to an embodiment, the information about the sub-period may include at least one of the period type indicating the HP or the ROP, information indicating the sub-period type of the HP or the ROP, the sub-period ID, the start BS index of the sub-period, the last BS index of the sub-period, or the reserved field.

The controller 1520 may control to receive, from the third UWB device, a ranging change request (RCR) for changing a ranging parameter between the first UWB device and the third UWB device.

The controller 1520 may determine whether to transmit a change request (CR) for the HP or the ROP based on at least one of sensor information measured by the first UWB device and the RCR. If it is determined to transmit the CR for the HP or the ROP, the controller 1520 may control to transmit the CR for the HP or the ROP to the second UWB device.

The controller 1520 may control to receive sensor information measured by the third UWB device from the third UWB device. The controller 1520 may determine whether it is necessary to change the ranging parameter in the sub-period based on at least one of the sensor information measured by the first UWB device, the sensor information measured by the third UWB device, and the RCR.

If it is determined that the ranging parameter in the sub-period needs to be changed, the controller 1520 may control to transmit a ranging control message (RCM) to which the changed ranging parameter is applied to the third UWB device.

If it is determined that it is not necessary to change the ranging parameter in the sub-period, the controller 1520 may control to transmit the RCM to the third UWB device without changing the ranging parameter.

The storage unit 1530 may store at least one of information transmitted/received via the transceiver 1510 and information generated via the controller 1520. For example, the storage unit 1530 may store information and data necessary for the method described above with reference to FIGS. 1 to 14C.

FIG. 16 illustrates a structure of a second UWB device according to an embodiment of the disclosure.

In the embodiment of FIG. 16, the first UWB device may correspond to the UWB device of FIG. 2, include a UWB device, or may be an electronic device that may include a portion of a UWB device.

In the embodiment of FIG. 16, the second UWB device may be a device configured to perform a role as a global coordinator.

Referring to FIG. 16, the second UWB device may include a transceiver 1610, a controller 1620, and a storage unit 1630. In the disclosure, the controller may be defined as a circuit or application-specific integrated circuit or at least one processor.

The transceiver 1610 may transmit and receive signals to/from another entity. The transceiver 1610 may transmit/receive data to/from another device using, e.g., UWB communication.

The controller 1620 may control the overall operation of the UWB device according to the embodiment proposed in the disclosure. For example, the controller 1620 may control inter-block signal flow to perform the operations according to the above-described flowchart. Specifically, the controller 1620 may control the operations of the UWB device described above with reference to FIGS. 1 to 14C.

The controller 1620 may control to transmit, to a first UWB device, a beacon message including configuration information about a superframe where a plurality of UWB devices communicate. The controller 1620 may control to receive, from the first UWB device, a change request (CR) for requesting to change a hybrid period (HP) or a ranging-only period (ROP) in the superframe. The controller 1620 may change the HP or the ROP in the superframe based on the CR.

According to an embodiment, the HP may include at least one contention free period (CFP) and at least one contention access period (CAP). According to an embodiment, the ROP may include at least one of a sub-ROP for two-way ranging (TWR) and a sub-ROP for one-way ranging (OWR).

According to an embodiment, the first UWB device may be configured as a local controller, and the second UWB device may be configured as a global coordinator.

According to an embodiment, the beacon message may include at least one of a beacon slot (BS) duration defined in units of ranging scheduling time units (RSTUs), a beacon interval defined in units of BSs, a first RCM BS index for the ROP, and information about the sub-period.

According to an embodiment, the information about the sub-period may include at least one of the period type indicating the HP or the ROP, information indicating the sub-period type of the HP or the ROP, the sub-period ID, the start BS index of the sub-period, the last BS index of the sub-period, or the reserved field.

The storage unit 1630 may store at least one of information transmitted/received via the transceiver 1610 and information generated via the controller 1620. For example, the storage unit 1630 may store information and data necessary for the method described above with reference to FIGS. 1 to 14C.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the present invention have been described above, various changes may be made thereto without departing from the scope of the present invention. Thus, the scope of the disclosure should not be limited to the above-described embodiments, and should rather be defined by the following claims and equivalents thereof.

## Claims

1. A method for operating a first ultra-wide band (UWB) device, the method comprising:
receiving, from a second UWB device, a beacon message including configuration information about a superframe where a plurality of UWB devices communicate;
identifying a hybrid period (HP) and a ranging-only period (ROP) in the superframe based on the configuration information; and
communicating with a third UWB device based on the HP and the ROP.

2. The method of claim 1, wherein the HP includes at least one contention-free period (CFP) and at least one contention access period (CAP), and
wherein the ROP may include at least one of a sub-ROP for two-way ranging (TWR) and a sub-ROP for one-way ranging (OWR).

3. The method of claim 1, wherein the first UWB device is configured as a local controller, the second UWB device is configured as a global coordinator, and the third UWB device is configured as a local controlee.

4. The method of claim 1, further comprising receiving, from the third UWB device, a ranging change request (RCR) for changing a ranging parameter between the first UWB device and the third UWB device.

5. The method of claim 4, further comprising:
determining whether to transmit a change request (CR) for the HP or the ROP based on at least one of sensor information measured by the first UWB device and the RCR; and
if it is determined to transmit the CR for the HP or the ROP, transmitting the CR for the HP or the ROP to the second UWB device.

6. The method of claim 4, further comprising:
receiving sensor information measured by the third UWB device from the third UWB device; and
determining whether it is necessary to change a ranging parameter in a sub-period based on at least one of sensor information measured by the first UWB device, sensor information measured by the third UWB device, and the RCR.

7. The method of claim 6, further comprising, if it is determined that the ranging parameter in the sub-period needs to be changed, transmitting a ranging control message (RCM) to which a changed ranging parameter is applied to the third UWB device.

8. The method of claim 6, further comprising, if it is determined that the ranging parameter in the sub-period does not need to be changed, transmitting the RCM to the third UWB device without changing the ranging parameter.

9. The method of claim 1, wherein the beacon message includes a beacon slot (BS) duration defined in a unit of a ranging scheduling time unit (RSTU), a beacon interval defined in a BS unit, a first RCM BS index for an ROP, and information about a sub-period.

10. The method of claim 9, wherein the information about the sub-period includes a period type indicating the HP or the ROP, information indicating a sub-period type of the HP or the ROP, a sub-period ID, a start BS index of the sub-period, a last BS index of the sub-period, and a reserved field.

11. A method for operating a second ultra-wide band (UWB) device, the method comprising:
transmitting a beacon message including configuration information about a superframe in which a plurality of UWB devices communicate to a first UWB device;
receiving, from the first UWB device, a change request (CR) for requesting to change a hybrid period (HP) or a ranging-only period (ROP) in the superframe; and
changing the HP or the ROP in the superframe based on the CR.

12. The method of claim 11, wherein the HP includes at least one contention-free period (CFP) and at least one contention access period (CAP), and
wherein the ROP may include at least one of a sub-ROP for two-way ranging (TWR) and a sub-ROP for one-way ranging (OWR).

13. The method of claim 11, wherein the first UWB device is configured as a local controller, and the second UWB device is configured as a global coordinator.

14. A first ultra-wide band (UWB) device, comprising:
a transceiver; and
a controller, wherein the controller is configured to control to:
receive, from a second UWB device, a beacon message including configuration information about a superframe where a plurality of UWB devices communicate;
identify a hybrid period (HP) and a ranging-only period (ROP) in the superframe based on the configuration information; and
communicate with a third UWB device based on the HP and the ROP.

15. A second ultra-wide band (UWB) device, comprising:
a transceiver; and
a controller, wherein the controller is configured to control to:
transmit a beacon message including configuration information about a superframe in which a plurality of UWB devices communicate to a first UWB device;
receive, from the first UWB device, a change request (CR) for requesting to change a hybrid period (HP) or a ranging-only period (ROP) in the superframe; and
change the HP or the ROP in the superframe based on the CR.
